(19) Europäisches Patentamt / European Patent Office / Office européen des brevets

(11) **EP 1 842 164 B1**

(12) **EUROPEAN PATENT SPECIFICATION**

(45) Date of publication and mention
of the grant of the patent:
**29.07.2009 Bulletin 2009/31**

(21) Application number: **06701850.7**

(22) Date of filing: **17.01.2006**

(51) Int Cl.:
***G06T 7/00*** (2006.01)

(86) International application number:
**PCT/IB2006/050170**

(87) International publication number:
**WO 2006/077534 (27.07.2006 Gazette 2006/30)**

(54) **IMAGE PROCESSING SYSTEM AND METHOD FOR ALIGNMENT OF IMAGES**

BILDVERARBEITUNGSSYSTEM UND VERFAHREN ZUR ANORDNUNG VON BILDERN

SYSTEME ET PROCEDE DE TRAITEMENT D'IMAGES POUR L'ALIGNEMENT D'IMAGES

(84) Designated Contracting States:
**AT BE BG CH CY CZ DE DK EE ES FI FR GB GR HU IE IS IT LI LT LU LV MC NL PL PT RO SE SI SK TR**

(30) Priority: **19.01.2005 EP 05300045**

(43) Date of publication of application:
**10.10.2007 Bulletin 2007/41**

(73) Proprietors:
• **Philips Intellectual Property & Standards GmbH 20099 Hamburg (DE)**
Designated Contracting States:
**DE**
• **Koninklijke Philips Electronics N.V. 5621 BA Eindhoven (NL)**
Designated Contracting States:
**AT BE BG CH CY CZ DK EE ES FI FR GB GR HU IE IS IT LI LT LU LV MC NL PL PT RO SE SI SK TR**

(72) Inventors:
• **ECK, Kai**
**c/o Société Civile SPID**
**75008 Paris (FR)**
• **BREDNO, Joerg**
**c/o Société Civile SPID**
**F-75008 Paris (FR)**
• **STEHLE, Thomas**
**c/o Société Civile SPID**
**F-75008 Paris (FR)**

(56) References cited:
WO-A-20/04034329    US-A- 4 709 385
US-A- 4 729 379    US-B1- 6 389 104

• **STUKE I ET AL: "Cardio dynamic subtraction angtography (CDSA)" SECOND JOINT EMBS-BMES CONFERENCE 2002. CONFERENCE PROCEEDINGS. 24TH. ANNUAL INTERNATIONAL CONFERENCE OF THE ENGINEERING IN MEDICINE AND BIOLOGY SOCIETY. ANNUAL FALL MEETING OF THE BIOMEDICAL ENGINEERINGSOCIETY. HOUSTON, TX, OCT. 23 - 26, 2002, ANNUA, vol. VOL. 1 OF 3. CONF. 24, 23 October 2002 (2002-10-23), pages 915-916, XP010619884 ISBN: 0-7803-7612-9**
• **ALIM O A ET AL: "A new method for dynamic road mapping of coronary angiography cardiac catheterization cine loops" RADIO SCIENCE CONFERENCE, 2003. NRSC 2003. PROCEEDINGS OF THE TWENTIETH NATIONAL MARCH 18-20, 2003, PISCATAWAY, NJ, USA, IEEE, 18 March 2003 (2003-03-18), pages K41-K410, XP010647317 ISBN: 977-5031-75-3**

**EP 1 842 164 B1**

## Description

This invention relates generally to an image processing system and method for alignment of a sequence of images with a previously obtained sequence of images in respect of the same body volume, and more particularly, to such a system and method for effecting such image alignment with compensation for motion of said body volume between said images.

The imaging of body volumes is practiced notably in the field of medical diagnostics and therapy, that is, in the context of X-ray fluoroscopy. Therefore, the X-ray projection of a biological body volume will be considered hereinafter by way of example, but the present invention is not intended to be restricted thereto and can be used in all fields of application with similar secondary conditions.

In treatment of coronary heart disease, both pre-interventional and interventional X-ray images are used. In pre-interventional coronary angiograms, a radio-opaque contrast agent injected in the coronary artery is used to make the respective artery visible. A number of angiograms are recorded and serve for diagnosis of, for example, stenoses, and as roadmaps for the subsequent X-ray controlled intervention. A special medical application in treatment of coronary heart disease is provided by the fluoroscopic observation of the propagation of a catheter in the vascular system of the patient. Thus, during intervention, a catheter or guidewire is advanced under X-ray surveillance (fluoroscopy) through the vessels to the lesion. The tip of the catheter must be advanced as accurately as possible into a region of interest to be treated or examined, for example, a stenosis, or a guidewire should be positioned behind the region of interest in such a manner that the tip of the catheter is correctly positioned. While this procedure is performed, the vessel structures are made visible for short periods of time by introducing short bursts of contrast agent through the catheter.

In order to assist navigation, it is known to display a manually selected one of the above-mentioned pre-interventional coronary angiograms of the body volume on a second monitor adjacent the current image of the body volume. The selected angiographic image supports the orientation for the attendant physician as a "vascular map" or "road map" of the vascular system. This roadmap, however, is naturally static, and is hence not suitable to achieve a desirable exact alignment of corresponding locations in the angiographic image and the current image with an accuracy in the millimetre or sub-millimetre range, because the body volume of a patient being observed is subject to motion which is caused, notably, by heartbeat and respiration. In other words, because the above-mentioned roadmap is static, it is not consistent with the instantaneous heartbeat and respiration movements in the fluoroscopic images.

In order to improve guidance during catheter placement, methods have been developed to overlay motion compensated roadmap information from the angiograms on the fluoroscopic images, as described in, for example, WO2004/034329. This overlaying is performed under the constraints of a latency budget and is therefore limited regarding the complexity of the chosen algorithms.

The choice of angiograms used in these known methods depends on the respiration status and the contraction status of the patient (and on the level of contrast agent filling). While the contraction status of fluoroscopies and angiographies can be readily compared by analysing the electrocardiographs (ECGs) of both sequences, the important registration of the respiration status is not so straightforward. Currently, both the angiographies and the fluoroscopies are compared to a reference angiography that shows the patient in either complete inhaled or exhaled state.

The similarity values of fluoroscopies and the angiographic reference frame cannot be compared directly to the similarity values of angiographies and the reference angiography, since the fluoroscopies are inherently less similar to the (angiographic) reference frame than other angiographies are. Therefore, the similarity value of any incoming frame is compared to the similarity span of the fluoroscopies and a respiration phase is calculated from this proportion. The angiographic frames are processed in similar ways: for each angiography, the similarity with the reference frame is calculated. From this similarity value and the span of occurring similarity values, the respiration phase is calculated. The alignment is then done by pairing fluoroscopies and angiographies with similar respiration phases.

One problem associated with this method is that it requires that both the angiographic sequence and the fluoroscopic sequence show approximately the same respiratory span. Typically, small changes in respiration depth are compensated by using a sliding max/min window for the estimation of the fluoroscopic respiration span, but with this method it is not possible to detect frames that have no matching angiographic respiration state because they are outside the angiographic breathing span, nor is it possible to cope with systematically deviating respiration depths in angiographies or fluoroscopies.

It is therefore an object of the present invention to address the above issue and provide an improved image processing system and method.

In accordance with the present invention, there is provided an image processing system comprising an input for receiving data representative of a current image of a body volume, said body volume being subject to a motion cycle comprising several phases between first and second extreme phases of motion, means for receiving data representative of the phase of motion of said body volume in said current image, storage means in which is stored a plurality of previously-obtained images of said body volume together with data representative of the respective phase of motion of said body volume in each image, means for selecting at least one of said previously-obtained images of said body volume having substantially the same phase of motion as that of said current image; wherein said data representative of said phase of motion of said body volume is determined by providing first and second static images of said body volume at respective said first and second extreme phases of motion, comparing an image under consideration with said first static image and generating a first value representative of its similarity thereto, comparising said image under consideration with said second static image and generating a second value representative of its similarity thereto, said first and second values together being representative of said phase of motion of said body volume captured in said image under consideration.

Beneficially, the system further comprises means for aligning said selected image with said current image, and preferably comprises means for superposing said selected image on said current image.

Thus, with the proposed system, instead of one angiographic reference frame, two angiographic reference frames are used that show the extreme inhaled and exhaled condition of the patient as recorded by angiographies. During fluoroscopy, each acquired angiography is compared to both reference frames. The result pair gives the fractional respiration position of the fluoroscopic frame in between the two angiographic reference frames. Thereby, the estimation of the matching angiographies for an incoming fluoroscopic frame is done more robustly than with the single-reference-frame method.

As an additional feature, with the two-reference-frame-method it is possible to detect fluoroscopic frames that are outside of the angiographic breathing span:

First the respiratory similarities of an incoming fluoroscopy image are calculated. These values are now compared with the corresponding values of the previous fluoroscopy frame. Under normal conditions, by stepping from the first fluoroscopy to the second fluoroscopy the similarity to reference frame A is increasing while the similarity to reference frame B is decreasing or vice versa. Only when the second fluoroscopy is outside the span of the angiographic respiration states, the similarity to both angiographic reference frames A and B is at the same time either increasing or decreasing. In this case, appropriate measures can be taken: for instance the assignment of angiographies and fluorescopies can be suspended until the fluoroscopic sequence again enters the angiographic respiration span. Alternatively, the angiographies now can be extrapolated using a model of the influence of respiration on the body, especially the heart.

Thus, means may be provided for determining if the phase motion of said body volume in said current image falls outside one of said extreme phases of motion. In one exemplary embodiment, the system may comprise an input for receiving a temporal sequence of current images of said body volume, wherein said phase of motion of said body volume in one of said current images is determined to fall outside one of said extreme phases of motion if said first and second values relating to said current image indicates that the similarity thereof to both said first and second static images at respective said first and second extreme phases of motion is either increasing or decreasing relative to the first and second values relating to the image immediately preceding said current image in said sequence. If the phase of motion of said body volume in a current image is determined to fall outside one of said extreme phases of motion, said selection of one or more of said previously-obtained images may be interrupted until the phase of motion of said body volume in a subsequent image in said sequence is determined to fall between said first and second extreme phases of motion. Alternatively, if the phase of motion of said body volume in a current image is determined to fall outside an extreme phase of motion, the static image of said body volume at said extreme phase of motion may be extrapolated using a predetermined model defining the influence of one or more parameters on said motion.

The body volume may be a biological body volume and motion of said body volume may be caused by heartbeat and/or respiration. The phase of motion may be detected by means of an electrocardiogram.

The present invention extends to a medical imaging apparatus, comprising means for capturing images of a body volume and an image processing system as defined above; and further X-ray apparatus including an image processing system as defined above.

Also in accordance with the present invention, there is provided a method of identifying in respect of a current image of a body volume one or more previously-obtained images of said body volume to be associated therewith, the method comprising receiving data representative of a current image of a body volume, said body volume being subject to motion cycle comprising several phases between first and second extreme phases of motion, receiving data representative the phase of motion of said body volume in said current image, and selecting from a plurality of previously-obtained images of said body volume at least one of said previously-obtained images of said body volume having substantially the same phase of motion as that of said current image; wherein said data representative of said phase of motion of said body volume is determined by providing first and second static images of said body volume at respective said first and second extreme phases of motion, comparing an image under consideration with said first static image and generating a first value representative of its similarity thereto, comparing said image under consideration with said second static image and generating a second value representative of its similarity thereto, said first and second values together being representative of said phase of motion of said body volume captured in said image under consideration.

Still further in accordance with the present invention, there is provided apparatus for generating data representative of a phase of motion of a body volume captured in an image frame, said body volume being subject to motion of several phases between first and second extreme phases of motion, the method comprising providing first and second static images of said body volume at respective said first and second extreme phases of motion, comparing said image frame with said first static image and generating a first value representative of its similarity thereto, comparing said image frame with said second static image and generating a second value representative of its similarity thereto, said first and second values together being representative of said phase of motion of said body volume captured in said image frame; and a method of generating data representative of a phase of motion of a body volume captured in an image frame, said body volume being subject to motion of several phases between first and second extreme phases of motion, the method comprising providing first and second static images of said body volume at respective said first and second extreme phases of motion, comparing said image frame with said first static image and generating a first value representative of its similarity thereto, comparing said image frame with said second static image and generating a second value representative of its similarity thereto, said first and second values together being representative of said phase of motion of said body volume captured in said image frame.

An embodiment of the present invention will now be described by way of example only and with reference to the accompanying drawings, in which:

Figure 1 is a schematic diagram illustrating an X-ray apparatus including an image processing system according to an exemplary embodiment of the present invention; and

Figure 2 is a schematic diagram illustrating the principle of operation of an image processing system according to an exemplary embodiment of the present invention.

The invention will be described in detail hereinafter on the basis of a medical application, although the invention is not intended to be restricted in any way to this field.

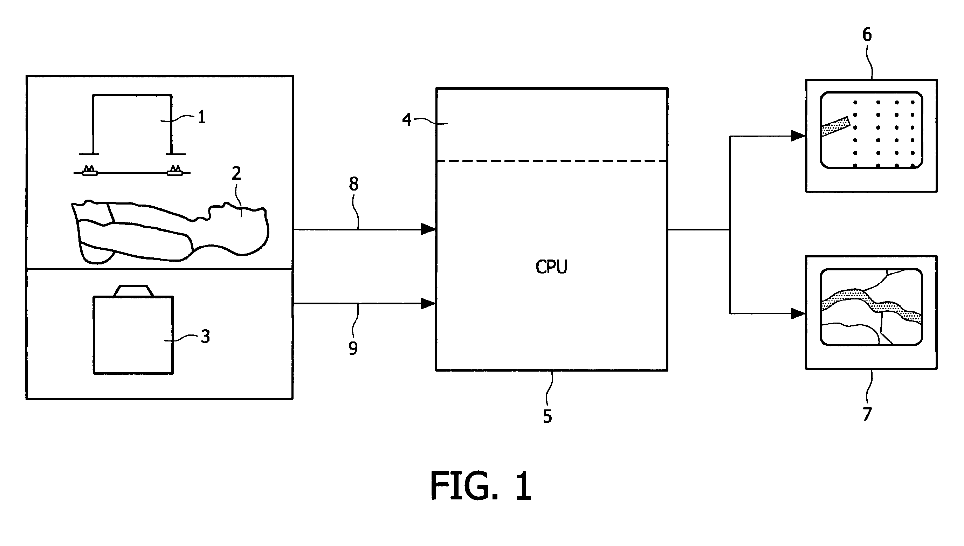

Referring to Figure 1 of the drawings, an X-ray apparatus according to an exemplary embodiment of the present invention comprises an X-ray source 3 and an X-ray detector 1 which are mounted at the end of a C-arm (not shown) and form an X-ray image of the body volume of a patient 2 positioned therebetween. This image is applied as a current fluoroscopic image 8 to an image processing system 5 (in real time). At the same time, the ECG (echocardiogram) of the patient 2, as well as a variable signal representing the respiratory cycle, is acquired and presented to the image processing system 5 in the form of signals 9.

The image processing system 5 comprises a memory 4 in which previous images of the body volume of the patient are stored. Such images may notably be angiographic images which have been acquired by means of the X-ray apparatus 1, 3 while utilising a radio-opaque contrast medium and which represent the vascular tree in the body volume in highlighted form. However, the previous images may also be buffered images or image sequences concerning the current intervention which have been acquired by means of the X-ray apparatus 1, 3. Images of this kind can reproduce in particular the position of an instrument, such as that of a catheter which has been introduced into the vascular system of the patient and has a catheter tip, or of a guide wire.

The image processing system 5 is also coupled to (at least) two monitors 6, 7 and is arranged to display the current image 8 "live" on both monitors 6, 7 and to display on the monitor, superposed thereon, one of the previous images derived from the memory 4. The parallel (superposed or separate) display of a previous image serves to facilitate the navigation of the instrument in the vascular tree of the patient 2 by the physician. For example, a previous angiographic image offers a sort of vascular map ("road map"), or a previous image of the same medical intervention shows, for example, the position of a stenosis dilated by a bulb catheter or the position of a previously-placed stent. In the latter cases, the previous image assists the physician in repositioning the instrument to a previously adopted location.

For the previous image to be useful, it is important that the position of the organs and vessels represented therein corresponds as accurately as possible to the situation in the current image. For given applications, and in the case of superposed reproduction of the current and previous images, a precision in the range of a millimetre or even sub-millimetre is required.

The above precision is achieved in accordance with this exemplary embodiment of the present invention in that the natural motion of the body volume itself, caused by the heartbeat and/or respiration, is taken into account for associating a previous image from the memory 4 with the current image 8.

In order to enable the heartbeat to be taken into account, the ECG over the duration of at least one heartbeat, during which the previous image was generated, as well as the instant of acquisition relative to the ECG are also stored in the memory 4, together with respective previous images. The respiratory phase domain starts at phase 0 corresponding to the fully exhaled phase, passes phase $\pi$ corresponding to the fully inhaled phase and ends at phase $2\pi$, which again corresponds to the fully exhaled phase. Thus, mapping the entire ECG cycle on the interval $[0, 2\pi]$ enables the acquisition instant to be expressed as a value from this interval which reflects the heartbeat position of a previous image and subsequently serves as a first index of the previous image.

In order to enable the respiration to be taken into account, moreover, a second index is provided for the previous images; this second index reflects their relative position in the respiratory cycle. The second index is also typically normalised to the interval $[0, 2\pi]$

In accordance with this exemplary embodiment of the present invention, the second index is acquired by way of a similarity comparison of the previous images with two reference images R1 and R2 which which the body volume under consideration is in respective first and second extreme instants of the respiratory cycle, i.e. "deep inhalation" and "deep exhalation". The second index of any given previous image then indicates its similarity distance relative to the reference images R1 and R2 and thus reflects the relative position in the respiratory cycle.

The reference images R1, R2 themselves may have been selected from the previous images.
In order to find an image defining an extreme phase of respiration from among the previous images, for each previous image its similarity measure relative to series of sequential images can be calculated experimentally. If these similarity measures change, for example, periodically with approximately double the respiratory frequency, the experimentally considered previous image will be an image from a central phase of the respiratory cycle; however, if the similarity measures change periodically with approximately the single respiratory frequency, the previous image considered belongs to an extreme phase of the respiration so that it is suitable for use as a reference image. In fact, for the purposes of this exemplary embodiment of the present invention, it is not necessary to know which of the reference images corresponds to extreme inhalation and which corresponds to extreme exhalation - it is sufficient that the two extreme states are identified as such.

An exemplary method of selecting a previous image to be associated with a current image will now be described in detail.

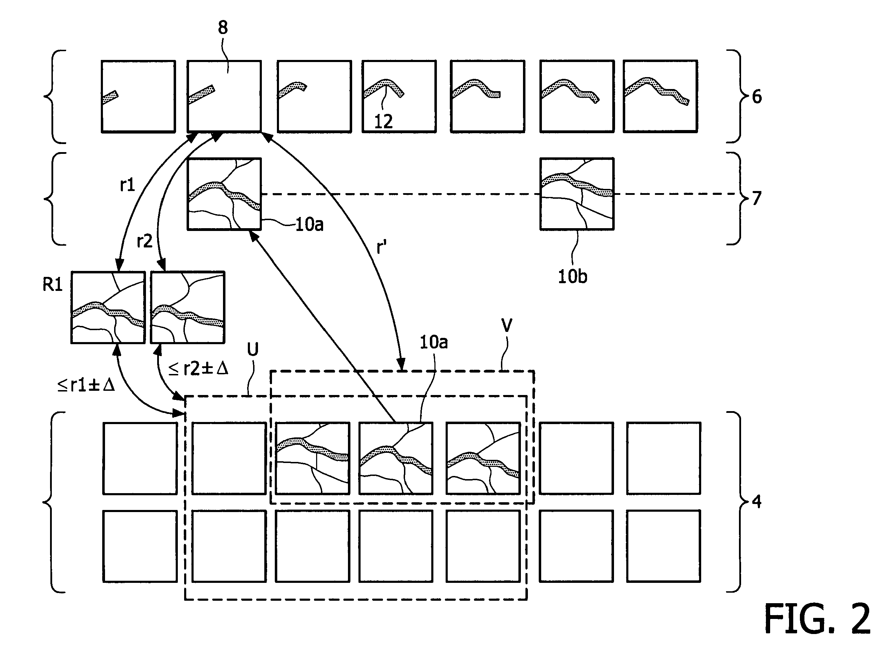

Figure 2 shows a first method of selection in accordance with an exemplary embodiment of the present invention on the basis of a diagrammatic representation. The upper row represents a sequence of live fluoroscopic images of the body volume, in which a catheter 12 is propagated, on the monitor 6 of Figure 1. One of these live images constitutes the "current image" 8 on which the following explanation is based.

A respective previous image 10a, 10b,.... is superposed on the live images on the monitor 7 of Figure 1; these previous images are fetched from the memory 4 and updated at intervals. The previous images may be, for example, angiographic images showing the vascular tree in the body volume. The selection and alignment of a previous image 10a with the current image 8 takes place in three steps according to a first exemplary embodiment of the present invention.

First, those images which have approximately the same similarity gap in respect of the respiratory cycle as the current image 8, relative to the predetermined reference images R1, R2, are selected from the memory 4. To this end, the current image 8 is compared with each reference image R1, R2 such that respective similarity measures r1, r2 can be calculated.

Analogously, the similarity measures can be calculated between the reference images R1, R2 and all previous images present in the memory 4. The latter has to be performed once for a given quantity of previous images, because the measures do not change. As previously stated, the pairs of similarity measures may be normalised and added as a (respiration) index to the stored previous images. Therefore, the amount of calculation work required during operation is comparitively small.

Using the similarity measures, or indices, a subquantity U of the previous images can be determined, whose members have approximately the same degree of similarity with resepct to the reference images R1, R2 as the current image 8. This means that the similarity measures of these images lie, for example, within a window (r1 $\pm$ $\Delta$),(r2 $\pm$ $\Delta$). If the memory 4 does not contain any image that satisfies this condition, the selection method may be interrupted at this point.

However, if the sub-quantity U contains at least one element, a second selection in respect of the respiratory cycle is carried out in a second step. The previous images in the sub-quantity U are then individually compared with the current image 8, that is, the associated similarity pairs r1',r2' are calculated and a sub-quantity V≤U is determined whose images exceed a limit value in respect of the similarity to the current image 8. The calculation-intensive individual comparison with the image 8 is minimised by the pre-selection of the quantity U.

Finally, in order to take into account the heartbeat, in a third step the previous image 10a, whose relative instant in the ECG is closest to the relative ECG instant of the current image 8, is selected from the subquantity V. For comparison between the electrocardiograms of the current image 8 and a previous image, a transformation is determined, for example, by means of a dynamic programming algorithm; this transformation maps the electrocardiograms on one another in an optimum fashion, thus enabling an exact prediction of the phase differences between the striking features (R, S, T lobes) of the electrocardiograms.

In a post-processing step (not shown) subsequent to the selection process, an estimate of motion and a correction between the selected previous image 10a and the current image 8 can be carried out so as to compensate for changes due to a (whole body) motion of the patient.

For the above exemplary method, the histogram energy of the image differences is a suitable exemplary measure of similarity between two images. The images to be compared are then subtracted from one another one pixel after the other and the histogram of the is difference image is calculated. This process is performed to compare the first reference image R1 with each of the previous images stored in the memory 4 and to compare the second reference image R2 with each of the previous images stored in the memory 4. Each resultant histogram indicates how many pixels n(G) of the difference image have each time a given grey scale value G. The similarity measure (r1,r2) can then be calculated as the respective histogram energy which is, by definition the square sum of all the pixels:

$$r = \sum_G n(G)^2$$

This definition means that histograms with a concentration of greyscale values have a high histogram energy, whereas histograms with as uniform as possible distribution of greyscale values over all pixels have a low histogram energy. The similarity measure according to this definition, therefore, has a small numerical value when the compared images have a high degree of similarity; and vice versa. A person skilled in the art can readily define alternative similarity measures on the basis of, for example, local correlation, cross-correlation or "mutual information" techniques.

The selected previous image 10a can be displayed on a monitor either separately or superposed on the current image 8.

Thus, with the proposed system, instead of one angiographic reference frame, two angiographic reference frames are used that show the extreme inhaled and exhaled condition of the patient as recorded by angiographies. During fluoroscopy, each acquired angiography is compared to both reference frames. The result pair gives the fractional respiration position of the fluoroscopic frame in between the two angiographic reference frames. Thereby, the estimation of the matching angiographies for an incoming fluoroscopic frame is done more robustly than with the single-reference-frame method.

As an additional feature, with the two-reference-frame-method it is possible to detect fluoroscopic frames that are outside of the angiographic breathing span:

First the respiratory similarities of an incoming fluoroscopy image are calculated. These values are now compared with the corresponding values of the previous fluoroscopy frame. Under normal conditions, by stepping from the first fluoroscopy to the second fluoroscopy the similarity to reference frame A is increasing while the similarity to reference frame B is decreasing or vice versa. Only when the second fluoroscopy is outside the span of the angiographic respiration states, the similarity to both angiographic reference frames A and B is at the same time either increasing or decreasing. In this case, appropriate measures can be taken: for instance the assignment of angiographies and fluorescopies can be suspended until the fluoroscopic sequence again enters the angiographic respiration span. Alternatively, the angiographies now can be extrapolated using a model of the influence of respiration on the body, especially the heart.

Possible options in this regard, include:

a) assume a linear relationship of the x-y shift of the heart and the breathing state (since both are sinusoidal functions over time and phase), calculate the relationship using linear regression (shifts of angiographies are calculated using, for example, cross-correlation of a part of the contrasted vessel tree), and extrapolate based on this relationship;

b) assume the phase of the ucrrent frame to be the extreme phase of the angiographic span (0 or $2\pi$), which at least provides an improvement over the prior art method which uses a single reference frame, in which the phase may wrongly be assumed to be going in the reverse direction;

c) reject the respective frame for display.

It should be noted that the above-mentioned embodiments illustrate rather than limit the invention, and that those skilled in the art will be capable of designing many alternative embodiments without departing from the scope of the invention as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. The singular reference of an element does not exclude the plural reference of such elements and vice-versa. The invention may be implemented by means of hardware comprising several distinct elements, and by means of a suitably programmed computer. In a device claim enumerating several means, several of these means may be embodied by one and the same item of hardware. The mere fact that certain measures are recited in mutually different dependent claims does not indicate that a combination of these measures cannot be used to advantage.

## Claims

1. Apparatus for generating data representative of a phase of motion of a body volume captured in an image frame (8), said body volume being subject to motion of several phases between first and second extreme phases of motion, the apparatus being **characterized in** being adapted to perform the method comprising providing first and second static images (R1,R2) of said body volume at respective said first and second extreme phases of motion, comparing said image frame (8) with said first static image (R1) and generating a first value (r1) representative of its similarity thereto, comparing said image frame (8) with said second static image (R2) and generating a second value (r2) representative of its similarity thereto, said first and second values (r1,r2) together being representative of said phase of motion of said body volume captured in said image frame (8).

2. An image processing system (5) comprising an input for receiving data representative of a current image (8) of a body volume, said body volume being subject to a motion cycle comprising several phases between first and second extreme phases of motion, means for receiving data representative of the phase of motion of said body volume in said current image (8), storage means (4) in which is stored a plurality of previously-obtained images (10a,10b) of said body volume together with data representative of the respective phase of motion of said body volume in each image, means for selecting at least one of said previously-obtained images (10a) of said body volume having substantially the same phase of motion as that of said current image (8); wherein said data representative of said phase of motion of said body volume is determined by the apparatus according to claim 1, wherein the image frame is the said image under consideration.

3. An image processing system (5) system according to claim 2, further comprising means for aligning said selected image (10a) with said current image (8).

4. An image processing system (5) according to claim 3, further comprising means for superposing said selected image (10a) on said current image (8).

5. An image processing system (5) according to claim 2, further comprising means for determining if the phase of motion of said body volume in said current image (8) falls outside one of said extreme phases of motion.

6. An image processing system (5) according to claim 5, comprising an input for receiving a temporal sequence of current images (8) of said body volume, wherein said phase of motion of said body volume in one of said current images (8) is determined to fall outside one of said extreme phases of motion if said first and second values (rl,r2) relating to said current image (8) indicates that the similarity thereof to both said first and second static images (R1,R2) at respective said extreme phases of motion is either increasing or decreasing relative to the first and second values relating to the image immediately preceding said current image (8) in said sequence.

7. An image processing system (5) according to claim 6, wherein if the phase of motion of said body volume in a current image (8) is determined to fall outside one of said extreme phases of motion, said selection of one or more of said previously-obtained images (10a) is interrupted until the phase of motion of said body volume in a subsequent image in said sequence is determined to fall between said first and second extreme phases of motion.

8. An image processing system (5) according to claim 5, wherein if the phase of motion of said body volume in a current image (8) is determined to fall outside an extreme phase of motion, the static image (R1,R2) of said body volume at said extreme phase of motion is extrapolated using a predetermined model defining the influence of one or more parameters on said motion.

9. An image processing system (5) according to claim 2, wherein said body volume is a biological body volume and motion of said body volume is caused by heartbeat and/or respiration.

10. An image processing system (5) according to claim 9, wherein said phase of motion is detected by means of an electrocardiogram.

11. A medical imaging apparatus, comprising means (1,3) for capturing images of a body volume and an image processing system (5) according to claim 2.

12. An X-ray apparatus (1,3) including an image processing system (5) according to claim 2.

13. A method of generating data representative of a phase of motion of a body volume captured in an image frame (8), said body volume being subject to motion of several phases between first and second extreme phases of motion, the method being **characterized in** comprising: providing first and second static images (R1,R2) of said body volume at respective said first and second extreme phases of motion, comparing said image frame (8) with said first static image (R1) and generating a first value (r1) representative of its similarity thereto, comparing said image frame (8) with said second static image (R2) and generating a second value (r2) representative of its similarity thereto, said first and second values (r1,r2) together being representative of said phase of motion of said body volume captured in said image frame (8).

14. A method of identifying in respect of a current image (8) of a body volume one or more previously-obtained images (10a,10b) of said body volume to be associated therewith, the method comprising receiving data representative of a current image (8) of a body volume, said body volume being subject to motion cycle comprising several phases between first and second extreme phases of motion, receiving data representative the phase of motion of said body volume in said current image(8), and selecting from a plurality of previously-obtained images (10a,10b) of said body volume at least one of said previously-obtained images (10a,10b) of said body volume having substantially the same phase of motion as that of said current image (8); wherein said data representative of said phase of motion of said body volume is determined by the method according to claim 13, wherein the image frame is the image under consideration.

**Patentansprüche**

1. Gerät zum Erzeugen von Daten, die eine in einem Einzelbild (8) festgehaltene Bewegungsphase eines Körpervolumens darstellen, wobei das genannte Körpervolumen der Bewegung mehrerer Phasen zwischen einer ersten und einer zweiten extremen Bewegungsphase unterliegt, wobei das Gerät **dadurch gekennzeichnet ist, dass** es vorgesehen ist, um das Verfahren durchzuführen, welches folgende Schritte umfasst: Liefern eines ersten und eines zweiten statischen Bildes (R1, R2) des genannten Körpervolumens bei der genannten ersten bzw. bei der genannten zweiten extremen Bewegungsphase; Vergleichen des genannten Einzelbildes (8) mit dem genannten ersten statischen Bild (R1) und Erzeugen eines ersten Wertes (r1), der seine Ähnlichkeit hiermit darstellt; Vergleichen des genannten Einzelbildes (8) mit dem genannten zweiten statischen Bild (R2) und Erzeugen eines zweiten Wertes (r2), der seine Ähnlichkeit hiermit darstellt, wobei der erste Wert und der zweite Wert (r1, r2) gemeinsam die in dem genannten Einzelbild (8) festgehaltene genannte Bewegungsphase des genannten Körpervolumens darstellen.

2. Bildverarbeitungssystem (5), das Folgendes umfasst: einen Eingang zum Empfangen von Daten, die ein aktuelles Bild (8) eines Körpervolumens darstellen, wobei das genannte Körpervolumen einem Bewegungszyklus unterliegt, der mehrere Phasen zwischen einer ersten und einer zweiten extremen Bewegungsphase umfasst; Mittel zum Empfangen von Daten, die die Bewegungsphase des genannten Körpervolumens in dem genannten aktuellen Bild (8) darstellen; Speichermittel (4), in denen eine Vielzahl von zuvor erlangten Bildern (10a, 10b) des genannten Körpervolumens gemeinsam mit Daten gespeichert wird, die die jeweilige Bewegungsphase des genannten Körpervolumens in jedem Bild darstellen; Mittel zum Auswählen von mindestens einem der genannten zuvor erlangten Bilder (10a) des genannten Körpervolumens, das im Wesentlichen die gleiche Bewegungsphase hat wie das des genannten aktuellen Bildes (8); wobei die genannten Daten, die die genannte Bewegungsphase des genannten Körpervolumens darstellen, durch das Gerät nach Anspruch 1 ermittelt werden, wobei das Einzelbild das genannte betrachtete Bild ist.

3. Bildverarbeitungssystem (5) nach Anspruch 2, weiterhin mit Mitteln zum Ausrichten des genannten ausgewählten Bildes (10a) auf das genannte aktuelle Bild (8).

4. Bildverarbeitungssystem (5) nach Anspruch 3, weiterhin mit Mitteln, um dem genannten aktuellen Bild (8) das genannte ausgewählte Bild (10a) zu überlagern.

5. Bildverarbeitungssystem (5) nach Anspruch 2, weiterhin mit Mitteln zum Bestimmen, ob die Bewegungsphase des genannten Körpervolumens in dem genannten aktuellen Bild (8) außerhalb einer der genannten extremen Bewegungsphasen liegt.

6. Bildverarbeitungssystem (5) nach Anspruch 5, das Folgendes umfasst: einen Eingang zum Empfangen einer zeitlichen Sequenz von aktuellen Bildern (8) des genannten Körpervolumens, wobei festgestellt wird, dass die genannte Bewegungsphase des genannten Körpervolumens in einem der genannten aktuellen Bilder (8) außerhalb von einer der genannten extremen Bewegungsphasen liegt, wenn der genannte erste und der genannte zweite Wert (r1, r2), die sich auf das genannte aktuelle Bild (8) beziehen, angeben, dass die Ähnlichkeit hiervon mit sowohl dem genannten ersten als auch dem genannten zweiten statischen Bild (R1, R2) bei den jeweiligen genannten extremen Bewegungsphasen in Bezug auf den ersten und den zweiten Wert, die sich auf das Bild unmittelbar vor dem genannten aktuellen Bild (8) in der genannten Sequenz beziehen, entweder zunimmt oder abnimmt.

7. Bildverarbeitungssystem (5) nach Anspruch 6, wobei wenn festgestellt wird, dass die Bewegungsphase des genannten Körpervolumens in einem aktuellen Bild (8) außerhalb von einer der genannten extremen Bewegungsphasen liegt, die genannte Auswahl von einem oder mehreren der genannten zuvor erlangten Bilder (10a) unterbrochen wird, bis festgestellt wird, dass die Bewegungsphase des genannten Körpervolumens in einem nachfolgenden Bild der genannten Sequenz zwischen der genannten ersten und der genannten zweiten extremen Bewegungsphase liegt.

8. Bildverarbeitungssystem (5) nach Anspruch 5, wobei wenn festgestellt wird, dass die Bewegungsphase des genannten Körpervolumens in einem aktuellen Bild (8) außerhalb einer extremen Bewegungsphase liegt, das statische Bild (R1, R2) des genannten Körpervolumens bei der genannten extremen Bewegungsphase mit Hilfe eines vorgegebenen Modells extrapoliert wird, das den Einfluss von einem oder mehreren Parametern auf die genannte Bewegung definiert.

**EP 1 842 164 B1**

**9.** Bildverarbeitungssystem (5) nach Anspruch 2, wobei das genannte Körpervolumen ein biologisches Körpervolumen ist und die Bewegung des genannten Körpervolumens durch Herzschlag und/oder Atmung hervorgerufen wird.

**10.** Bildverarbeitungssystem (5) nach Anspruch 9, wobei die genannte Bewegungsphase mit Hilfe eines Elektrokardiogramms erkannt wird.

**11.** Medizinisches Bildgebungsgerät, mit Mitteln (1, 3) zum Erfassen von Bildern eines Körpervolumens und einem Bildverarbeitungssystem (5) nach Anspruch 2.

**12.** Röntgengerät (1, 3) mit einem Bildverarbeitungssystem (5) nach Anspruch 2.

**13.** Verfahren zum Erzeugen von Daten, die eine in einem Einzelbild (8) festgehaltene Bewegungsphase eines Körpervolumens darstellen, wobei das genannte Körpervolumen der Bewegung mehrerer Phasen zwischen einer ersten und einer zweiten extremen Bewegungsphase unterliegt, wobei das Verfahren **dadurch gekennzeichnet ist, dass** es folgende Schritte umfasst: Liefern eines ersten und eines zweiten statischen Bildes (R1, R2) des genannten Körpervolumens bei der genannten ersten bzw. bei der genannten zweiten extremen Bewegungsphase; Vergleichen des genannten Einzelbildes (8) mit dem genannten ersten statischen Bild (R1) und Erzeugen eines ersten Wertes (r1), der seine Ähnlichkeit hiermit darstellt; Vergleichen des genannten Einzelbildes (8) mit dem genannten zweiten statischen Bild (R2) und Erzeugen eines zweiten Wertes (r2), der seine Ähnlichkeit hiermit darstellt, wobei der erste Wert und der zweite Wert (r1, r2) gemeinsam die in dem genannten Einzelbild (8) festgehaltene genannte Bewegungsphase des genannten Körpervolumens darstellen.

**14.** Verfahren, um in Bezug auf ein aktuelles Bild (8) eines Körpervolumens ein oder mehrere zuvor erlangte Bilder (10a, 10b) des genannten Körpervolumens für die Zuordnung hierzu zu identifizieren, wobei das Verfahren Folgendes umfasst: Empfangen von Daten, die ein aktuelles Bild (8) eines Körpervolumens darstellen, wobei das genannte Körpervolumen einem Bewegungszyklus unterliegt, der mehrere Phasen zwischen einer ersten und einer zweiten extremen Bewegungsphase umfasst; Empfangen von Daten, die die Bewegungsphase des genannten Körpervolumens in dem genannten aktuellen Bild (8) darstellen; und Auswählen aus einer Vielzahl von zuvor erlangen Bildern (10a, 10b) des genannten Körpervolumens von mindestens einem der genannten zuvor erlangten Bilder (10a, 10b) des genannten Körpervolumens, das im Wesentlichen die gleiche Bewegungsphase hat wie das des genannten aktuellen Bildes (8); wobei die genannten Daten, die die genannte Bewegungsphase des genannten Körpervolumens darstellen, durch das Verfahren nach Anspruch 13 ermittelt werden, wobei das Einzelbild das genannte betrachtete Bild ist.

**Revendications**

**1.** Appareil destiné à générer des données représentatives d'une phase de déplacement d'un volume de corps acquis dans une trame d'image (8), ledit volume de corps étant soumis à un déplacement de plusieurs phases entre des première et deuxième phases extrêmes de déplacement, l'appareil étant **caractérisé en ce qu'**il est apte à effectuer le procédé comprenant l'étape consistant à fournir des première et deuxième images statiques (R1, R2) dudit volume de corps aux dites première et deuxième phases extrêmes de déplacement, l'étape consistant à comparer ladite trame d'image (8) à ladite première image statique (R1) et à générer une première valeur (r1) représentative de sa similarité à celle-ci, l'étape consistant à comparer ladite trame d'image (8) à ladite deuxième image statique (R2) et à générer une deuxième valeur (r2) représentative de sa similarité à celle-ci, lesdites première et deuxième valeurs (r1, r2) ensemble étant représentatives de ladite phase de déplacement dudit corps de volume acquis dans ladite trame d'image (8).

**2.** Appareil de traitement d'images (5) comprenant une entrée destinée à recevoir des données représentatives d'une image actuelle (8) d'un volume de corps, ledit volume de corps étant soumis à un cycle de déplacement comprenant plusieurs phases entre des première et deuxième phases extrêmes de déplacement, des moyens pour recevoir des données représentatives de la phase de déplacement dudit volume de corps dans ladite image actuelle (8), des moyens de stockage (4) dans lesquels il est stocké une pluralité d'images obtenues précédemment (10a, 10b) dudit volume de corps ensemble avec des données représentatives de la phase respective de déplacement dudit volume de corps dans chaque image, des moyens pour sélectionner au moins l'une desdites images obtenues précédemment (10a) dudit volume de corps ayant sensiblement la même phase de déplacement que celle de ladite image actuelle (8) ; dans lequel lesdites données représentatives de ladite phase de déplacement dudit volume de corps sont déterminées par l'appareil selon la revendication 1, dans lequel la trame d'image est ladite image considérée.

**3.** Système de traitement d'images (5) selon la revendication 2, comprenant en outre des moyens pour aligner ladite image sélectionnée (10a) avec ladite image actuelle (8).

**4.** Système de traitement d'images (5) selon la revendication 3, comprenant en outre des moyens pour superposer ladite image sélectionnée (10a) sur ladite image actuelle (8).

**5.** Système de traitement d'images (5) selon la revendication 2, comprenant en outre des moyens pour déterminer si la phase de déplacement dudit volume de corps dans ladite image actuelle (8) est à l'extérieur de l'une desdites phases extrêmes de déplacement.

**6.** Système de traitement d'images (5) selon la revendication 5, comprenant une entrée pour recevoir une séquence temporelle d'images actuelles (8) dudit volume de corps, dans lequel il est déterminé que ladite phase de déplacement dudit volume de corps dans l'une desdites images actuelles (8) se trouve à l'extérieur de l'une desdites phases extrêmes de déplacement si lesdites première et deuxième valeurs (r1, r2) concernant ladite image actuelle (8) indiquent que la similarité de celle-ci aux dites première et deuxième images statiques (R1, R2) aux dites phases extrêmes respectives de déplacement augmente ou diminue par rapport aux première et deuxième valeurs concernant l'image précédant immédiatement ladite image actuelle (8) dans ladite séquence.

**7.** Système de traitement d'images (5) selon la revendication 6, dans lequel s'il est déterminé que la phase de déplacement dudit volume de corps dans une image actuelle (8) se trouve à l'extérieur de l'une desdites phases extrêmes de déplacement, ladite sélection d'une ou plusieurs desdites images obtenues précédemment (10a) est interrompue jusqu'à ce qu'il soit déterminé que la phase de déplacement dudit volume de corps dans une image suivante dans ladite séquence se trouve entre lesdites première et deuxième phases extrêmes de déplacement.

**8.** Système de traitement d'images (5) selon la revendication 5, dans lequel s'il est déterminé que la phase de déplacement dudit volume de corps dans une image actuelle (8) se trouve à l'extérieur d'une phase extrême de déplacement, l'image statique (R1, R2) dudit volume de corps à ladite phase extrême de déplacement est extrapolée en utilisant un modèle prédéterminé définissant l'influence d'un ou plusieurs paramètres sur ledit déplacement.

**9.** Système de traitement d'images (5) selon la revendication 2, dans lequel ledit volume de corps est un volume de corps biologique et le déplacement dudit volume de corps est provoqué par un battement de coeur et/ou une respiration.

**10.** Système de traitement d'images (5) selon la revendication 9, dans lequel ladite phase de déplacement est détectée au moyen d'un électrocardiogramme.

**11.** Appareil d'imagerie médicale, comprenant des moyens (1, 3) pour l'acquisition d'images d'un volume de corps et un système de traitement d'images (5) selon la revendication 2.

**12.** Appareil de radiologie (1, 3) comprenant un système de traitement d'images (5) selon la revendication 2.

**13.** Procédé destiné à générer des données représentatives d'une phase de déplacement d'un volume de corps acquis dans une trame d'image (8), ledit volume de corps étant soumis à un déplacement de plusieurs phases entre des première et deuxième phases extrêmes de déplacement, le procédé étant **caractérisé en ce qu'**il comprend les étapes consistant à : fournir des première et deuxième images statiques (R1, R2) dudit volume de corps aux dites première et deuxième phases extrêmes de déplacement, comparer ladite trame d'image (8) à ladite première image statique (R1) et générer une première valeur (r1) représentative de sa similarité à celle-ci, comparer ladite trame d'image (8) à ladite deuxième image statique (R2) et générer une deuxième valeur (r2) représentative de sa similarité à celle-ci, lesdites première et deuxième valeurs (r1, r2) ensemble étant représentatives de ladite phase de déplacement dudit corps de volume acquis dans ladite trame d'image (8).

**14.** Procédé d'identification, en ce qui concerne une image actuelle (8) d'un volume de corps, d'une ou plusieurs images obtenues précédemment (10a, 10b) dudit volume de corps à associer à celle-ci, le procédé comprenant les étapes consistant à recevoir des données représentatives d'une image actuelle (8) d'un volume de corps, ledit volume de corps étant soumis à un cycle de déplacement comprenant plusieurs phases entre des première et deuxième phases extrêmes de déplacement, recevoir des données représentatives de la phase de déplacement dudit volume de corps dans ladite image actuelle (8), et sélectionner parmi une pluralité d'images obtenues précédemment (10a, 10b) dudit volume de corps au moins l'une desdites images obtenues précédemment (10a, 10b) dudit volume de corps ayant sensiblement la même phase de déplacement que celle de ladite image actuelle (8) ; dans lequel lesdites données représentatives de ladite phase de déplacement dudit volume de corps sont déterminées par le procédé selon la revendication 13, dans lequel la trame d'image est l'image considérée.

FIG. 1

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004034329 A